(19) Europäisches Patentamt
European Patent Office
Office européen des brevets

(11) **EP 3 617 641 A1**

(12) **EUROPEAN PATENT APPLICATION**

(43) Date of publication:
**04.03.2020  Bulletin 2020/10**

(21) Application number: **19180097.8**

(22) Date of filing: **13.06.2019**

(51) Int Cl.:
**G01B 5/00** (2006.01)  **G01C 13/00** (2006.01)
**B63G 8/24** (2006.01)  **G03B 17/08** (2006.01)
**G03B 17/56** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **29.08.2018  US 201862724203 P**
         **12.04.2019  US 201916382356**

(71) Applicant: **National Geographic Society Washington, DC 20036 (US)**

(72) Inventors:
• **Berkenpas, Eric J.**
  **Washington, DC District of Columbia 20010 (US)**

• **Henning, Bradley S.**
  **Washington, DC District of Columbia 20009, (US)**
• **Shepard, Charles M.**
  **Silver Spring, MD Maryland 20901 (US)**
• **Turchnik, Alan J.**
  **Washington, DC District of Columbia 20009 (US)**

(74) Representative: **dompatent von Kreisler Selting Werner -**
  **Partnerschaft von Patent- und Rechtsanwälten mbB**
  **Deichmannhaus am Dom**
  **Bahnhofsvorplatz 1**
  **50667 Köln (DE)**

(54) **AN APPARATUS, SYSTEM AND METHOD FOR A BUOYANCY-CONTROLLED LAGRANGIAN CAMERA PLATFORM**

(57)  A Buoyancy-Controlled Lagrangian Camera Platform and method for use to observe layers of the open ocean. The platform has subsystems for recovery, for its camera, and for its buoyancy engine, which has a buoyancy engine and engine controller to control the platform depth. The engine controller adjusts the buoyancy engine volume with an adaptive PID control system and gain scheduling to control the buoyancy engine. The method for observation consists of a camera platform, a surface vessel with an echosounder, and a means of communication between the two. The vessel uses the echosounder to identify layers of the open water for the platform to target for observation. Instruction and feedback between the platform and vessel are communicated using an acoustic modem. The vessel also uses the acoustic link to track the Buoyancy-controlled Lagrangian Platform with repeated queries on its depth and range.

FIG 1

**Description**

**CROSS-REFERENCE TO RELATED APPLICATIONS**

This application claims priority from U.S. Provisional Patent Application No. 62/724,203, filed on August 29, 2018, entitled "A BUOYANCY-CONTROLLED LAGRANGIAN CAMERA PLATFORM," the entire contents of which are hereby incorporated by reference.

**BACKGROUND**

Open ocean (pelagic) ecosystems represent some of the largest and most unexplored systems on the planet. The Mesopelagic layer (ocean depths of 200-1000M), including the so-called acoustic scattering layers, and Bathypelagic layer (1000-1500M) are home to Earth's largest (by both total biomass and number of individuals) ecological communities. These layers make up the habitat of micronekton (swimming fishes, crustaceans, cephalopods, and gelatinous species), who make up the trophic levels between primary producers (phytoplankton) and apex pelagic predators (marine mammals and large fish). Vertical migrations within these layers contribute significantly to the ocean's ability to absorb carbon dioxide from the atmosphere and to the availability of food for the apex predators. Additionally, the populations in these layers demonstrate an extraordinary ability to adapt themselves to an environment with scarce food and light through physiological and morphological means.

Research into these systems is hampered by the high cost of current sampling methods. This leads to their infrequent use, which limits the current understanding of the organisms that occupy these areas. Current methods of research include net trawls, sonar studies, and upper water column surveys by scuba divers. Unlike in the deep benthos, where inexpensive lander systems can be deployed, and on land where wildlife camera traps can be used, the scattering layers present a more challenging region at depths between scuba range and the deep benthos. Buoyancy engines allow vehicles to maintain certain depths for various purposes, but there have been difficulties in precision, efficiency, and control. The engines may overshoot their target depths and require multiple adjustments, the engines may be unable to maintain a specific depth, and the unforeseeable nature of the layers makes preprogramming imperfect. These limitations have limited the utility of buoyancy engines in use for exploration and observation due to an inability to adequately control their depth.

Typically, imaging of these deep scattering layers (beyond scuba range) is conducted with costly manned submersibles, remotely operated vehicles, or autonomous underwater vehicles. Additional attempts to record ecosystems in these regions have included tethered shipside camera systems, but these attempts are subject to uncontrollable subsea currents, which can compromise the recordings with erratic movement.

**SUMMARY**

Exemplary disclosure of the DriftCam is a Buoyancy-controlled Lagrangian Camera Platform for open water observation where a buoyancy engine and engine controller may adjust the platform to a desired depth. The engine controller may use an adaptive Proportional Integral Derivative (PID) control system with gain scheduling for achieve a desired depth. The gain scheduling may be based on Operating Points, which may be selected for speed of adjustment and/or for minimizing adjustments depending on the status.

An exemplary embodiment of the method for observation may consist of a Buoyancy-controlled Lagrangian Camera Platform, a surface vessel with an echosounder, and a means of communication between the platform and vessel. The vessel may use the echosounder to identify layers of the open water to target for observation, which may then be communicated to the platform. The platform may observe the layers according to those instructions and send performance feedback and data to the vessel. The communication between the vessel and the platform may use an acoustic modem. The modem may allow for commands to be sent to the platform or for queries on depth, range, and other information. These queries may be used to track the platform as it drifts.

**BRIEF DESCRIPTION OF THE FIGURES**

FIG. 1 is an exemplary embodiment of a Buoyancy-controlled Lagrangian Camera Platform.
FIG 2. is an exemplary embodiment of an electrical layout of a Buoyancy-controlled Lagrangian Camera Platform.
FIG 3. is an exemplary embodiment of a camera subsystem within a Buoyancy-controlled Lagrangian Camera Platform.
FIG 4. is an exemplary embodiment of a buoyancy engine within a Buoyancy-controlled Lagrangian Camera Platform.

FIG 5. is an exemplary embodiment depicting an adaptive proportional-integral-derivative control system for a buoyancy engine controller in a Buoyancy-controlled Lagrangian Camera Platform.
FIG 6. is an exemplary embodiment depicting the use of a surface vessel with a Buoyancy-controlled Lagrangian Camera Platform.

## DETAILED DESCRIPTION

Aspects of the invention are disclosed in the following description and related drawings directed to specific embodiments of the invention. Alternate embodiments may be devised without departing from the spirit or the scope of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments. Moreover, the terms "embodiments of the invention", "embodiments" or "invention" do not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

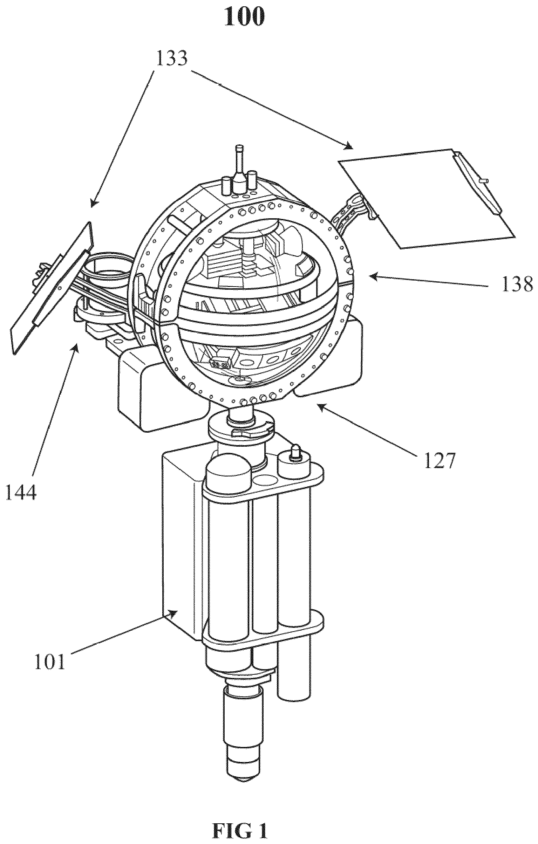

According to an exemplary embodiment, and referring generally to the Figures, a Buoyancy-Controlled Lagrangian Camera Platform 100 and use thereof may be disclosed. Turning to exemplary Figure 1, Figure 1 displays an exemplary embodiment of a Buoyancy-Controlled Lagrangian Camera Platform 100. In an exemplary embodiment, the embodiment may contain a Camera Subsystem 127, a Recovery Subsystem 138, a Buoyancy Engine Subsystem 101, and an Acoustic Modem Subsystem 144. The subsystems 127, 138, 101, and 144 may be connected with Water-proof Connectors 148. The Platform 100 may be used to study underwater ecosystems. Study may include observation of pelagic ecosystems and their member organisms in the pelagic layers of the ocean. Observation may include imaging of micronektons.

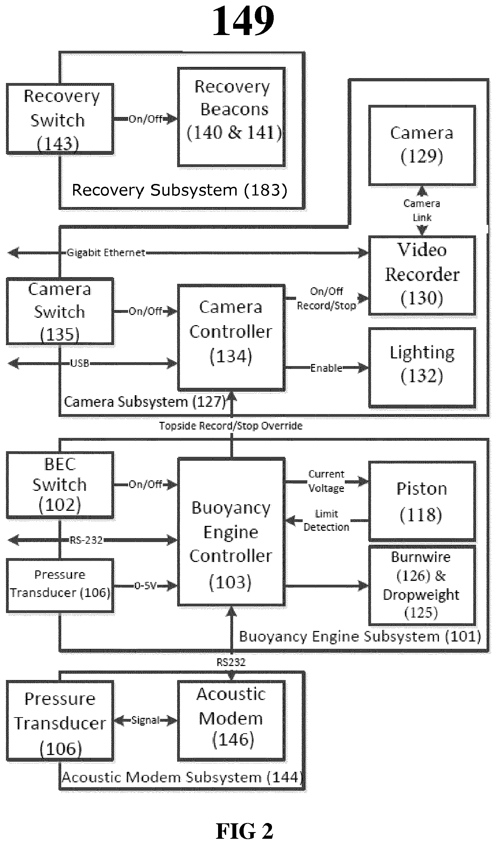

Turning now to exemplary Figure 2, Figure 2 depicts an exemplary flowchart of subsystem functionality. Figure 2 may depict an electrical block diagram 149. Electrical block diagram 149 may show an exemplary means of connecting the components of Buoyancy-Controlled Lagrangian Camera Platform 100 and its subsystems.

The Buoyancy Engine Subsystem 101 may be used to control the depth of the Platform 100. The Buoyancy Engine Subsystem 101 may contain a Buoyancy Engine Controller Switch 102, a Buoyancy Engine Controller 103, and a Buoyancy Engine 109. The Buoyancy Engine Controller Switch 102 may be used to turn the Buoyancy Engine Controller 103 on and off. The Switch 102 may be a magnet switch. The Buoyancy Engine Controller 103 may be connected to a Bulkhead. The Bulkhead may contain Bulkhead Connectors 108. The Bulkhead Connectors 108 may be used to program the Buoyancy Engine Controller 103. The Bulkhead Connectors 108 may be used to charge the Buoyancy Engine Controller 103. The Buoyancy Engine Controller 103 may control the Buoyancy Engine 109. The Buoyancy Engine Controller 103 may receive pressure readings from a Pressure Transducer 106. The Buoyancy Engine Controller 103 may use the pressure to determine what commands to give the Buoyancy Engine 109. The Buoyancy Engine Controller 103 may also control a Burn Wire 126 for a Drop Weight 125. The Burn Wire 126 may be activated to release the Drop Weight 125. The Drop Weight 125 may be released to bring the Platform 100 back to the surface for recovery. The Drop Weight 125 release may be used as a failsafe for recovery. The Buoyancy Engine Controller 103 may connect to the Camera Subsystem 127. The Buoyancy Engine Controller 103 may give commands to the Camera Subsystem 127. The Buoyancy Engine Controller 103 may receive data from the Camera Subsystem 127. The Buoyancy Engine Controller 103 may connect to the Acoustic Modem Subsystem 144. The Buoyancy Engine Controller 103 may receive commands from the Acoustic Modem Subsystem 144. The Buoyancy Engine Controller 103 may send data to the Acoustic Modem Subsystem 144.

The Camera Subsystem 127 may be used to record layers of open water. The Camera Subsystem 127 may contain a Camera Switch 135, a Camera Controller 134, Lighting 132, a Video Recorder 130, a Camera 129, and Bulkhead Connectors 136. The Camera Switch 135 may be used to turn the Camera Controller 134 on and off. The Camera Switch **135** may be a magnet switch. The lighting **132** may be high-output LED's. The Camera Controller **134** may connect to the Buoyancy Engine Controller **103**. The Camera Controller **134** may connect to the Acoustic Modem Subsystem **144**. The Camera Controller **132** may receive commands from the Acoustic Modem Subsystem **144**. The Camera Controller **132** may connect to Bulkhead Connectors **136**. The Bulkhead Connectors **136** may include a USB. The Bulkhead Connectors **136** may be used to program the Camera Controller **132**. The Camera Controller **132** may give commands to the Lighting **132,** Camera **129,** and Video Recorder **130**. The Camera Controller **132** may give commands based on programmed schedules. The Camera Controller **132** may give commands based on commands from the Acoustic Modem System **144**. The Video Recorder **130** may connect to the Camera **129**. The Video Recorder **130** may connect to Bulkhead Connections **136**. The Bulkhead Connections **136** may include an ethernet connection. The Camera **129**'s settings may be set through the Video Recorder **130** using the Bulkhead Connections **136**.

The Acoustic Modem Subsystem **144** may be used for two-way communication with a remote operator during deployment. The Acoustic Modem Subsystem **144** may be contained in custom underwater Acoustic Housing **145**. The Acoustic Modem Subsystem **144** may allow a remote operator to control depth, camera settings and use, lighting functions, and Drop Weight **125** release. The Acoustic Modem Subsystem **144** may include an Acoustic Modem **146** and an Acoustic Transducer **147**. The Acoustic Modem **146** may transmit messages. The Acoustic Modem **146** may receive messages. The Acoustic Modem **146** may function at 80 bs-1 in the 9-12-kHz acoustic frequency band. The Acoustic Modem **146** may use an omnidirectional Acoustic Transducer **147** to function. The Acoustic Modem Subsystem **144** may also allow for remote queries as to the Platform **100**'s depth, subsystem states, power voltage, and distance. Repeated remote queries to distance and depth may allow for subsea tracking of the Platform **100** during deployment.

The Recovery Subsystem **138** may be used to recover the Platform **100**. The Recovery Subsystem **138** may allow an operator to find the Platform **100**. The Recovery Subsystem **138** may include Recovery Housing **139,** one or more Recovery Beacons, a Recovery Switch **143,** and a Power Supply **142**. The Recovery Housing **139** may be polished borosilicate spherical housing. The Recovery Subsystem **138** may share Housing with the Camera Subsystem **127**. The Recovery Subsystem **138** may be in the top of the Housing **138**. The Recovery Switch **143** may turn the Recovery Subsystem **138** on and off. The Recovery Switch **143** may be a Magnetic Switch. The Recovery Subsystem **138** may always be kept on during deployments. The Recovery Beacons may include a Short-Range Transmitter **140**. The Recovery Beacons may include a Long-Range Transmitter **141**. The Recovery Subsystem may be electrically isolated from the other subsystems. Long-Range Transmitters **141** may include radio transmitters, satellite transmitters, or light beacons. A Long-Range Recovery Beacon **141** may be an Argos Transmitter for global tracking. A Short-Range Transmitter **141** may be a VHF Transmitter. The Power Supply **142** may be a battery. The Battery may power the Recovery Subsystem **138** for at least one year. In other exemplary embodiments, a power may be harnessed from external energy sources. External energy may include solar power or a current turbine.

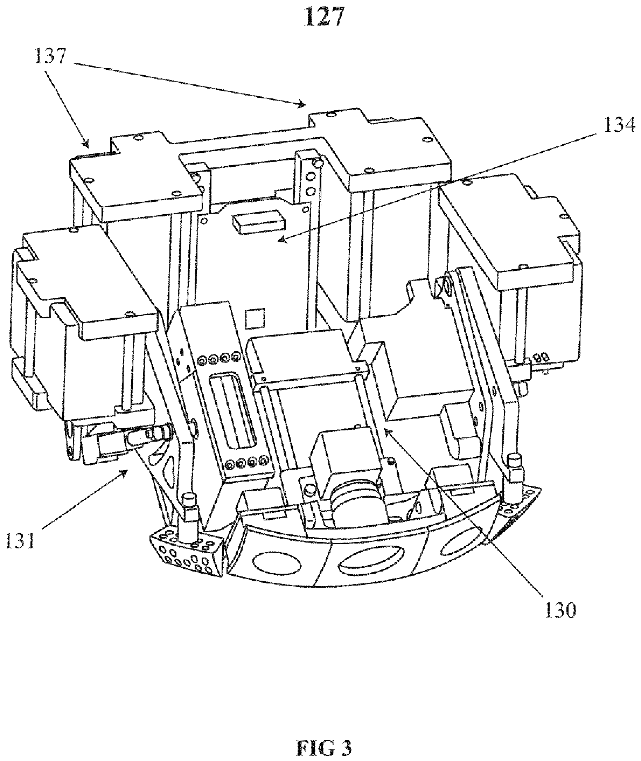

Turning now to exemplary Figure 3, Figure 3 displays an exemplary embodiment of a Camera Subsystem **127**. The Camera Subsystem **127** may include a Camera **129**, a Tilt Mechanism **131,** a Video Recorder **130,** a Camera Controller **134,** Lighting **132,** External Reflectors **133,** and a Power Supply **142**. The Camera Subsystem **127** may be used to record images in pelagic layers. The Camera Subsystem **127** may be contained in Camera Housing **128**. The Camera Housing **128** may be made of polished borosilicate. The Camera Housing **128** may be spherical. The Camera Housing **128** may have a depth rating of 12,000 meters. The Camera **129** may be high-definition. The Camera **129** may be low-light. Other exemplary embodiments of a Camera **129** may use infrared operations or other wavelengths. The Camera **129** may be on a Tilt Mechanism **131** to allow a broad field of view. The Tilt Mechanism **131** may be a single-axis servo-actuated tilting gimbal. The Camera **129** may have a pre-focused lens. Other exemplary embodiments may allow for the lens to adjust while deployed. The Camera lens may be positioned as close as possible to the Camera Housing **128** to maximize field of view. The Camera **131** may have a large fl.8 aperture to maximize the light received. The Lighting **132** may be high-output LED's. Other exemplary embodiments may use lighting wavelengths outside the detection range for midwater species to reduce biotic effects of artificial lighting. The LED's may be mounted within the Camera Housing **128**. The LED's may be aimed outwards towards External Reflectors **133**. The External Reflectors **133** may be outside of the camera's field of view. The External Reflectors **133** may direct light into the camera's field of view. The Camera Controller **134** may control the camera settings, tilt, and operation. The Camera Battery **137** may any source of power, including a battery. The Camera Controller **134** may operate based on preprogrammed inputs or by remote instruction. The Camera Subsystem **127** may have bulkheads. The Bulkhead Connections **136** may be ethernet or universal serial buses connections. The Bulkhead Connections **136** may be used for programming or for recharging. Other exemplary embodiments may use custom designed ports, allow for Bluetooth or wireless LAN connectivity, or use inductive charging or other wireless charging methods instead of bulkheads.

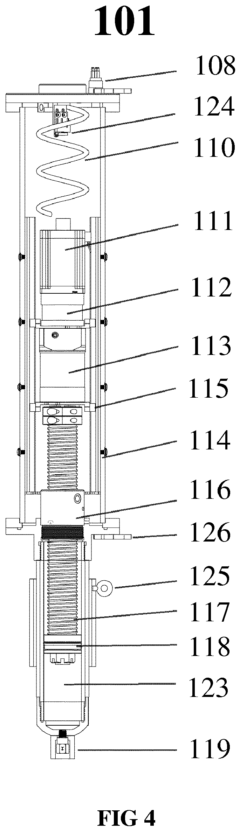

The Buoyancy Engine Subsystem **101** may be used to control the Platform **100**'s operating depth. Buoyancy Engine Subsystem **101** may contain a Buoyancy Engine Controller Switch **102,** a Buoyancy Engine Controller **103,** and a Buoyancy Engine **109**. Turning now to exemplary Figure 4, Figure 4 displays an exemplary embodiment of a Buoyancy Engine **109** in a Buoyancy Engine Subsystem **101**. The Buoyancy Engine **109** may adjust the buoyancy of the Platform **100** by adjusting the Platform **100**'s density. This may be achieved by changing the volume while keeping the mass constant. The major forces acting on the Platform **100** may be gravity ($F_g$), buoyancy ($F_b$), and drag ($F_d$). The forces may be expressed according to the following table and equations.

| Symbol | Description | Value/Units |
|---|---|---|
| a | Vertical acceleration of the system | m·s-2 |
| $a_g$ | Acceleration due to gravity | 9.8 m·s-2 |
| $\rho$ | Nominal density of seawater | 1027 kg·m-3 |
| A | Effective vertical cross-sectional area | 0.146 m2 |
| $C_d$ | Coefficient of vertical drag | 1.8 |
| m | Mass of the system | 85 kg |
| t | Time | s |
| V | Static system volume | 82.5 L |
| $V_{be}$ | Buovancv engine added volume | 0-400 mL |
| $v$ | Vertical velocity of the system | m·s-1 |
| $v_f$ | Seawater vertical flow velocity | m·s-1 |
| $v_c$ | Vertical component of current | m·s-1 |
| $v_i$ | Initial vertical velocity of the system | m·s-1 |

$$(1) \; F_g = -ma_g$$

$$(2) \; F_b = (V + V_{be}) \, \rho a_g$$

$$(3) \; F_d = \tfrac{1}{2} \, \text{sgn}\,(v_f) \, \rho A C_d v_f^2$$

The vertical acceleration of the Platform **100** may then be represented by the following equation:

$$(4) \; a = (F_g + F_b + F_d) \, m^{-1}$$

The vertical velocity of the Platform **100** may then be given by

$$(5) \; v = v_c - v_f = v_c + v_i + a(dt).$$

A simulation model of the hydrodynamic forces may be used to estimate the forces acting on the Platform **100**. The model may not account for all factors.

The Buoyancy Engine **109** may adjust the volume of the Platform **100** system. The Buoyancy Engine **109** may be contained in a Stainless Steel Cylinder **121**. Electrical power may be provided to the Buoyancy Engine **109** using a Power Wire **110**. The Power Wire **110** may power a Stepper Motor **111**. The Stepper Motor **111** may turn a Planetary Gearbox **113**. The Planetary Gearbox **113** may be a 40:1 gearbox. The Planetary Gearbox **113** and Stepper Motor **111** may combine for 35 N·m of torque to actuate the Buoyancy Engine **109**. The Planetary Gearbox **113** may be attached to a Ball Screw **117**. The Ball Screw **117** may be turned by the Planetary Gearbox **113**. The Ball Screw **117** may turn through a Ball Nut **116**. As the Ball Screw **117** turns, it may convert rotational motion into linear displacement. The Ball Screw **117** may linearly displace the Piston **118**. The Piston **118** may be a single-stroke, encoder-less, hydraulic piston. As the Piston **118** is linearly displaced, it may expel oil into an External Bladder **122**. The Piston **118** may displace oil at a maximum flow rate of 450 $\mu$L·s-1. The Piston **118** may create a Partial Vacuum **123** when it is moved towards the Stepper Motor **111**. The volume of the expanding External Bladder **122** may increase the volume of the Platform **100** system. The Buoyancy Engine **109** may operate in the reverse order to decrease the volume of the Platform **100** system.

The Buoyancy Engine **109** may also adjust the density by changing the mass of the Platform **100** system. The Buoyancy Engine **109** may change the mass of the Platform **100** system using a Drop Weight **125**. The Drop Weight **125** may be released using a Burn Wire **126**. The Burn Wire **126** may be activated by the Buoyancy Engine Controller **103**.

The Buoyancy Engine **109** may operate immersed in the oil it expels. The Piston **118** may have a Dynamic Seal **120** that rotates and displaces vertically through a steel cylinder **121**. A Brake **112** may keep the Piston **118** from back driving under high hydrostatic pressure. The Brake **112** may be an electromechanical brake. The Buoyancy Engine **109** may have Limit Switches **124** on each end of the motor assembly's travel. The Limit Switches **124** may allow endpoint indexing. The components of the Buoyancy Engine **109** may be held in place using a Motor Assembly Guide Track **114** and Roller Bearings **115**.

The Buoyancy Engine **109** may be commanded using a Buoyancy Engine Controller **103**. The Buoyancy Engine Controller **103** may include Housing **104,** a Power Supply **107,** a Controller Circuit Board, and a Pressure Transducer **106**. The Power Supply **107** may be a rechargeable battery pack. The Buoyancy Engine Controller **103** may be housed in a separate pressure housing than the Buoyancy Engine **109**. A Pressure Transducer **106** may obtain pressure feedback. The Pressure Transducer **106** may be temperature-compensated. In order to convert the Platform 100's ambient local pressure to depth, a pre-calculated lookup table may be used using Fofonoff's method of converting pressure to depth: where

| Symbol | Description | Value/Units |
|---|---|---|
| P | Platform's ambient local pressure | Decibars (dbar) |
| Lat | Latitude of platform | Degrees |
| DEPTH | Platform's depth | Meters (m) |
| DEPTH_GR | Platform's depth corrected for latitude | Meters (m) |

such that

$$X = \sin\left(\frac{Lat}{57.29578}\right)$$

$$GR = 9.780318 \times (1.0 + (5.2788 \times 10^{-3} + 2.36 \times 10^{-5} \times X^2) \times X^2) + 1.0192 \times 10^{-6 \times P}$$

$$DEPTH = (((-1.82 \times 10^{-15*P} + 2.279 \times 10^{-10}) \times P - 2.2512 \times 10^{-5}) \times P + 9.72659) \times P$$

$$DEPTH\_GR = DEPTH/GR$$

The Least Squares Formula may be used to eliminate the need for computing logarithms. The Buoyancy Engine Controller **103** may control adjustable parameters to command the Buoyancy Engine **109**. The adjustable parameters may include Gain Scheduler Settings, Volume Control Settings, Control flow settings, and Motor Drive settings. The settings may include the following:

ADJUSTABLE CONTROL PARAMETERS

| PARAMETER | VALUE | UNITS |
|---|---|---|
| Motor Microstepping Rate | 256.00 | microsteps step-1 |
| Maximum Flow Rate Acceleration | 67.20 | μL s-2 |
| Maximum Flow Rate | 448.50 | μL s-1 |
| Minimum Flow Rate Cutoff | 4.48 | μL s-1 |
| Pressure Variance Estimation Length | 4.00 | min |
| OP2 Pressure Variance Threshold | 226.90 | kPa2 |

(continued)

| PARAMETER | VALUE | UNITS |
|---|---|---|
| OP1 Absolute Error Threshold | 134.70 | kPa |
| OP2 Absolute Error Threshold | 13.47 | kPa |
| OP1 Volume Controller Proportional Gain | -333.28 | nL Pa-1 |
| OP2 Volume Controller Proportional Gain | -6.67 | nL Pa-1 |
| OP1 Volume Controller Integral Gain | -1.67 | nLPa-1 |
| OP2 Volume Controller Integral Gain | -6.70 | pL Pa-1 |
| OP1 Volume Controller Integral Window | 471.50 | kPa |
| OP2 Volume Controller Integral Window | 471.50 | kPa |
| OP1 Volume Controller Integral Epsilon | 0.00 | kPa |
| OP2 Volume Controller Integral Epsilon | 0.00 | kPa |
| OP1 Volume Controller Differential Gain | 20.00 | µL s Pa-1 |
| OP2 Volume Controller Differential Gain | 0.00 | nL s Pa-1 |
| Flow Controller Proportional Gain | 0.20 | s-1 |
| Flow Controller Integral Gain | 0.00 | s-1 |
| Flow Controller Integral Window | 0.00 | nL |
| Flow Controller Integral Epsilon | 0.00 | kPa |
| Flow Controller Differential Gain | 0.00 | s s-1 |
| Volume Zero Adjust | 0.00 | mL |

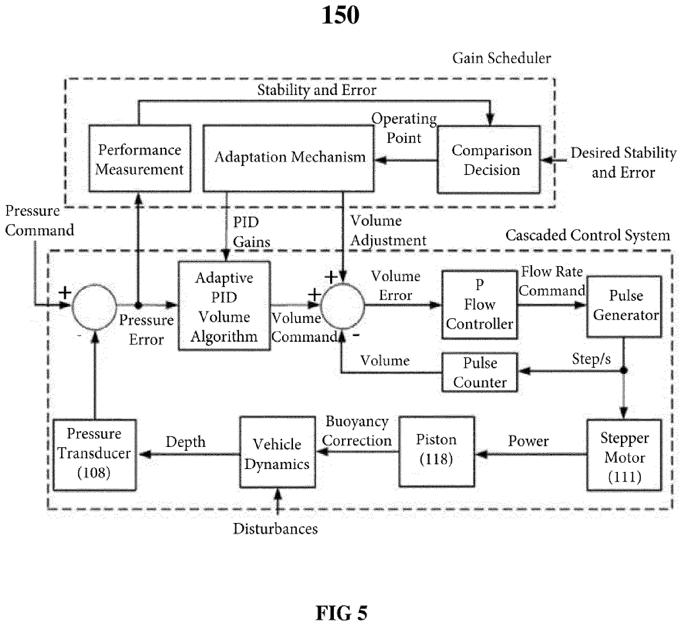

The adjustable parameters may be stored in onboard nonvolatile memory. The Controller Circuit Board may be programmed with an adaptive PID (proportional-integral-derivative) control system. Turning now to Figure 5, Figure 5 is a depiction of an adaptive PID control system.

The adaptive PID control system may have a Gain Scheduler that corrects gains in a PID control system. The Gain Scheduler may have multiple Operating Points. One Operating Point, OP1, may be for the Platform **100** at Terminal Velocity. One Operating Point, OP2, may be for the Platform **100** when it is nearly stationary. Nearly stationary may be defined as moving at less than one centimeter per second. The Operating Points may have preset settings for the adjustable parameters. OP1 may have parameters selected to achieve a desired depth rapidly. OP2 may have parameters selected to minimize Buoyancy Engine Subsystem **101** activation while maintaining an absolute error of less than 5 m. The Gain Scheduler may receive a pressure error equal to the difference between the pressure at the current depth compared to the pressure at the desired depth. Based on the state of the Buoyancy Engine **109** and pressure error, the Gain Scheduler may select an Operating Point for the PID control system. The Performance Measurement may include a measurement of the platform's stability and current pressure error. Stability may be measured by estimating the time-windowed Variance of the absolute pressure error. The performance measurements may be sent forward for use in a Comparison Decision. A Comparison Decision may be made by comparing the performance measurements to preset thresholds for selecting Operating Points. Based on the Operating Point selected, the Gain Scheduler may apply gains for that operating point to the Adaptive PID Volume Algorithm. When directing transitions between operating points, the Gain Scheduler may also apply a volume offset for correction to changes in overall system volume. The Adaptive PID Volume Algorithm may deliver volume adjustments commands to the Buoyancy Engine Subsystem **101.** The volume adjustments may result in a buoyancy correction. The buoyancy correction may result in an adjusted depth. The adjusted depth may result in an adjusted pressure. The adjusted pressure may be measured by the Pressure Transducer **106.** The Pressure Transducer **106** may provide feedback to the Controller Circuit Board. The Controller Circuit may command further adjustment until the Platform **100** achieves the desired depth.

The Buoyancy Engine Controller **103** may operate based on preprogrammed inputs or by remote instruction. The Buoyancy Engine Controller **103** may also include a Power Supply **107.** The Buoyancy Engine Subsystem **101** may have Bulkhead Connections **108.** The Bulkhead Connections **108** may be used for programming or for recharging the Power Supply **107.** Other exemplary embodiments may use custom designed ports, allow for Bluetooth or wireless LAN connectivity, or use inductive charging or other wireless charging methods instead of bulkheads.

The Buoyancy Engine Controller **103** preset parameters for the Buoyancy Engine may be created and tuned using a tuning workflow. The tuning workflow may consist of simulation steps and in-water steps. The simulation steps may be numerical simulation and hardware-in-the-loop (HIL) simulation.

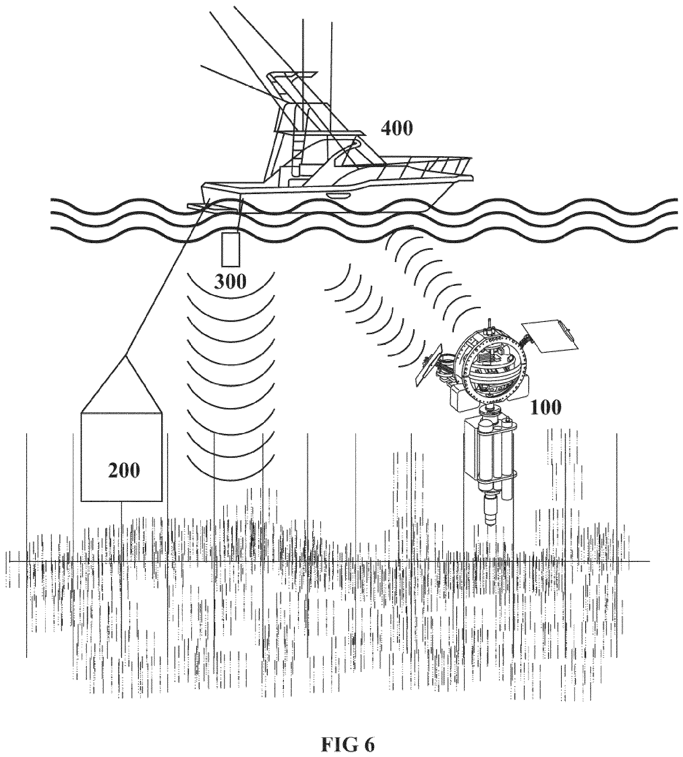

The Buoyancy-controlled Lagrangian Camera Platform **100** may be used in conjunction with a Surface Vessel **400**. Turning now to exemplary Figure 6, Figure 6 displays an exemplary embodiment of the use of a Surface Vessel **400** with a Buoyancy-controlled Lagrangian Camera Platform **100**. The Surface Vessel **400** may include devices to communicate with the Acoustic Modem Subsystem **144** and the Recovery Beacon Subsystem **138**. The Surface Vessel **400**'s communication with the Acoustic Modem Subsystem **144** may allow for both queries and commands to be sent to the Platform **100**. The Surface Vessel **400**'s communication with the Acoustic Modem Subsystem **144** may allow responses to be received from the Platform **100**. The Surface Vessel **400** may follow the movement of the Platform **100** as it moves by tracking it. The Surface Vessel **400** may track the Platform **100** using queries to the Acoustic Modem Subsystem **144**. The Surface Vessel **400** may also track the Platform **100** using the Recovery Beacon Subsystem **138**. The Surface Vessel **400** may track the Platform **100** by taking depth and range measurements from surface locations about 100 meters apart and drawing the overlapping circles. The intersections may identify the Platform **100**'s location. Other exemplary embodiments may track the Platform **100** with an acoustic tracking system (eg. USBL) or other locating methods. The Surface Vessel **400** may also have an Echo-Sounder **300**. The Echo-Sounder **300** may be used to target specific depths for the Platform **100** to operate in. This may be especially useful during diel migrations when the depths are inconsistent and may require adjustments. The Echo-Sounder **300** may also be used to create an echogram of the scattering layers that approximates that of the Platform **100** due to their close proximity. The Surface Vessel **400** may have a Profiling Sensor **200** for measuring conditions in the water column at all depths. The Profiling Sensor **200** may be a tethered also tether a CTD (conductivity, temperature, depth) device. This may provide additional information about the conditions that the Platform **100** is observing.

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art (for example, features associated with certain configurations of the invention may instead be associated with any other configurations of the invention, as desired).

Therefore, the above-described embodiments should be regarded as illustrative rather than restrictive. Accordingly, it should be appreciated that variations to those embodiments can be made by those skilled in the art without departing from the scope of the invention as defined by the following claims.

**Parts List**

| Part | Number |
|---|---|
| Surface Vessel | 400 |
| Echo Sounder | 300 |
| Profiling Sensor | 200 |
| Buoyancy-controlled Lagrangian Platform | 100 |
| **Buoyancy Engine Subsystem** | **101** |
| Buoyancy Engine Controller Switch | 102 |
| Buoyancy Engine Controller | 103 |
| Buoyancy Engine Housing | 104 |
| Circuit Board | 105 |
| Pressure Transducer | 106 |
| Power Supply | 107 |
| Bulkhead Connectors | 108 |
| Buoyancy Engine | 109 |
| Power Wire | 110 |
| Stepper Motor | 111 |
| Brake | 112 |

(continued)

| Part | Number |
|---|---|
| Planetary Gearbox | 113 |
| Motor Assembly Guide Track | 114 |
| Roller Bearings | 115 |
| Ball Nut | 116 |
| Ball Screw | 117 |
| Piston | 118 |
| One-Wav Check Valve | 119 |
| Dynamic Seal | 120 |
| Stainless-Steel Cylinder | 121 |
| External Bladder | 122 |
| Partial Vacuum | 123 |
| Limit Switches | 124 |
| Drop Weight | 125 |
| Burn Wire | 126 |
| **Camera Subsystem** | **127** |
| Camera Housing | 128 |
| Camera | 129 |
| Video Recorder | 130 |
| Tilt Mechanism | 131 |
| Lighting | 132 |
| External Reflectors | 133 |
| Camera Controller | 134 |
| Camera Switch | 135 |
| Bulkhead connections | 136 |
| Camera Battery | 137 |
| **Recovery Subsystem** | **138** |
| Recovery Housing | 139 |
| Short-range Transmitter | 140 |
| Long-range Transmitter | 141 |
| Power Supply | 142 |
| Recovery Switch | 143 |
| **Acoustic Modem Subsystem** | **144** |
| Acoustic Housing | 145 |
| Acoustic Modem | 146 |
| Acoustic Transducer | 147 |
| Power Supply | 147 |
| Water-proof connectors | 148 |
| Electrical Block Diagram | 149 |

(continued)

| Part | Number |
|---|---|
| Control System Block Diagram | 150 |

**Claims**

1. A Buoyancy-controlled Lagrangian Camera Platform comprising:

   a buoyancy engine subsystem wherein:

   the buoyancy engine subsystem contains a pressure transducer,
   the pressure transducer is configured to provide pressure readings to a buoyancy engine controller; and
   the buoyancy engine controller is configured to command the buoyancy engine using an adaptive PID control system to control the engine volume, wherein;
   a gain scheduler is configured with linear control operating points with predetermined parameters;
   the gain scheduler directs the buoyancy engine controller parameters based on selected operating points
   the buoyancy engine controller commands adjustments to the buoyancy engine until the platform achieves a desired depth; and

   a camera subsystem.

2. The apparatus described in Claim 1 wherein the gain scheduler also applies a volume offset when transitioning between operating points, or
   where there are two operating points.

3. The apparatus described in Claim 1 where one operating point describes the platform at terminal velocity where the parameters rapidly achieve a desired depth, or
   where one operating describes the platform when it is at a nearly constant depth and where the parameters actuate minimally.

4. The apparatus described in Claim 1 where one operating describes the platform when it is at a nearly constant depth and where the parameters actuate minimally while maintaining an absolute error of less than 5 m.

5. The apparatus described in Claim 1 where one operating describes the platform when it is at a depth changing at less than 1 cm/s and the parameters actuate minimally.

6. The apparatus described in Claim 1 wherein the camera subsystem comprises:

   a means for lighting;
   a camera; and
   a video recorder
   where the camera is on a tilting mechanism configured for an increased field of view.

7. The apparatus described in Claim 1 wherein the camera subsystem also adjusts the lighting based on the field of view.

8. The apparatus described in Claim 1 wherein the Buoyancy-controlled Lagrangian Platform also comprises an acoustic modem subsystem comprising:

   an acoustic modem; and
   an acoustic transducer.

9. The apparatus described in Claim 1 wherein the Buoyancy-controlled Lagrangian Platform also comprises a subsystem configured for two-way communication with a remote operator, or wherein the Buoyancy-controlled Lagrangian Platform also comprises a recovery subsystem comprising;
   one or more recovery beacons; and

a power supply.

10. The apparatus described in Claim 1 wherein the Buoyancy-controlled Lagrangian Platform also comprises a recovery subsystem comprising;

    one or more recovery beacons; and
    a power supply capable of powering the subsystem for a full year, or

    wherein the Buoyancy-controlled Lagrangian Platform also comprises a recovery subsystem comprising;

    one or more recovery beacons; and
    a power supply,
    which is kept on throughout the entirety of the apparatus' deployment.

11. A method of targeted open water observation comprising;
    surveying the water with an echosounder from a surface vessel,
    identifying the depth of layers to target for observation,
    designating desired settings for mode of observation at said layers,
    sending desired depths and modes from the surface vessel to a Buoyancy-controlled Lagrangian Platform,
    recording the targeted layers from the platform according to said instructions, and
    sending performance and data from the platform back to the surface vessel for processing or further instruction.

12. The method of Claim 11 wherein the surface vessel also tethers a conductivity, temperature, and pressure (CTD) device to provide further information about the conditions recorded by the Buoyancy-controlled Lagrangian Camera Platform.

13. The method of Claim 11 wherein the surface vessel also queries the Platform for operating statuses of its subsystems, or
    where the surface vessel also commands the depth of the Platform during diel vertical migration events.

14. A method for remaining within range of a Buoyancy-controlled Lagrangian Camera Platform in open water comprising;
    attaching a swim platform to the surface vessel,
    establishing a digital acoustic link between the surface vessel to the Buoyancy-controlled Lagrangian Camera Platform,
    querying a depth and range from the Buoyancy-controlled Lagrangian Camera Platform to the surface vessel,
    relocating the surface vessel to a nearby location,
    querying a second depth and range from the Buoyancy-controlled Lagrangian Camera Platform to the surface vessel,
    drawing overlapping circles for potential locations based on the two queries,
    relocating the surface vessel to one of the intersections of the two circles,
    querying a third depth and range from the Buoyancy-controlled Lagrangian Camera Platform to the surface vessel,
    estimating the location of the Buoyancy-controlled Lagrangian Camera Platform based on the three queries,
    repeating over regular intervals as necessary to remain within range of the Buoyancy-controlled Lagrangian Camera Platform.

15. The method of Claim 14 conducted while simultaneously sending commands to the Platform with respect to its depth and modes of observation.

**100**

133

138

144

127

101

FIG 1

**149**

FIG 2

**127**

**FIG 3**

**101**

108
124
110
111
112
113
115
114
116
126
125
117
118
123
119

**FIG 4**

**150**

FIG 5

**FIG 6**

Europäisches
Patentamt

European
Patent Office

Office européen
des brevets

**EUROPEAN SEARCH REPORT**

Application Number

EP 19 18 0097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERIC J. BERKENPAS ET AL: "A Buoyancy-Controlled Lagrangian Camera Platform for In Situ Imaging of Marine Organisms in Midwater Scattering Layers", IEEE JOURNAL OF OCEANIC ENGINEERING., vol. 43, no. 3, 1 July 2018 (2018-07-01), pages 595-607, XP055646792, US ISSN: 0364-9059, DOI: 10.1109/JOE.2017.2736138 * the whole document * | 1-15 | INV. G01B5/00 G01C13/00 B63G8/24 G03B17/08 G03B17/56 |
| X | EP 2 876 520 A1 (COUNCIL SCIENT IND RES [IN]) 27 May 2015 (2015-05-27) | 1,11 | |
| A | * paragraph [0006] * * paragraph [0014]; figures * | 2-10, 12-15 | |
| X | ELGAR DESA ET AL: "In Situ Profiling of Eastern Arabian Sea Coastal Waters Using a New Autonomous Vertical Profiler", IEEE JOURNAL OF OCEANIC ENGINEERING, IEEE SERVICE CENTER, PISCATAWAY, NJ, US, vol. 38, no. 1, 1 January 2013 (2013-01-01), pages 43-54, XP011486017, ISSN: 0364-9059, DOI: 10.1109/JOE.2012.2209234 * page 10 * | 1,11 | TECHNICAL FIELDS SEARCHED (IPC) G01B G01C B63G B63B G03D G03B |
| A | US 4 408 488 A (MARSHALL SAMUEL W [US]) 11 October 1983 (1983-10-11) * column 1, paragraph 30 - paragraph 41; figure * | 1-15 | |
| A | KR 101 223 551 B1 (KOREA INST OCEAN SCI & TECH [KR]) 17 January 2013 (2013-01-17) * paragraph [0004] * | 1-15 | |

-/--

The present search report has been drawn up for all claims

| Place of search | Date of completion of the search | Examiner |
|---|---|---|
| The Hague | 27 November 2019 | Schmitter, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 18 0097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/178603 A1 (IMLACH JOSEPH [US] ET AL) 16 July 2009 (2009-07-16) * paragraph [0009]; figures * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 27 November 2019 | Schmitter, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 19 18 0097

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2019

| Patent document cited in search report | | Publication date | Patent family member(s) | Publication date |
|---|---|---|---|---|
| EP 2876520 | A1 | 27-05-2015 | NONE | |
| US 4408488 | A | 11-10-1983 | NONE | |
| KR 101223551 | B1 | 17-01-2013 | NONE | |
| US 2009178603 | A1 | 16-07-2009 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 62724203 A